(19)

Europäisches
Patentamt

European
Patent Office

Office européen
des brevets

(11) **EP 4 772 544 A1**

(12) **EUROPEAN PATENT APPLICATION**

(43) Date of publication:
08.07.2026 Bulletin 2026/28

(21) Application number: 25223693.0

(22) Date of filing: 16.12.2025

(51) International Patent Classification (IPC):
*C08F 8/04* (2006.01)   *C08F 297/04* (2006.01)

(52) Cooperative Patent Classification (CPC):
(C-Sets available)
C08F 8/04; C08F 297/04   (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 18.12.2024 US 202463735333 P

(71) Applicant: Kraton Polymers Nederland B.V.
1322 CE Almere (NL)

(72) Inventor: DE GROOT, Hendrik
1031 HL Amsterdam (NL)

(74) Representative: Henkel & Partner mbB
Patentanwaltskanzlei, Rechtsanwaltskanzlei
Maximiliansplatz 21
80333 München (DE)

(54) **HYDROGENATED RADIAL POLYMER AND OIL COMPOSITION CONTAINING THE SAME**

(57) The disclosure provides a hydrogenated coupled radial styrenic copolymer having three or more polymeric arms radiating from a polyalkenyl coupling agent. Each arm comprises a hydrogenated styrene-butadiene copolymer segment containing vinyl-aromatic and hydrogenated diene-derived units. The coupled radial copolymer functions as a viscosity-index improver and shear-stability enhancer, imparting high viscosity index and reduced viscosity loss to the composition.

The hydrogenated coupled radial styrenic copolymer functions as a viscosity index improver in oil compositions, particularly bio-based oil concentrates (composition). The oil concentrate may be further diluted with additional bio-based oils or fossil-based oils to form lubricant or functional-fluid formulations exhibiting improved viscosity retention, oxidative resistance, and thermal stability.

EP 4 772 544 A1

(52) Cooperative Patent Classification (CPC): (Cont.)

C-Sets
**C08F 8/04, C08F 297/04**

**Description**

**FIELD**

The present disclosure relates to a hydrogenated coupled radial styrenic copolymer, and biobased oil compositions containing the same for improved viscosity index and method of preparation thereof.

**BACKGROUND**

It is known that viscosity of lubricating oils changes with temperature. Lubricating oils must perform effectively across a wide temperature range, being not overly viscous at low temperatures nor too thin at high temperatures. The variation in the oil viscosity with temperature is measured by viscosity index (VI), typically determined using viscosity measurements taken between 40°C and 100°C. A higher viscosity index indicates less change in viscosity with temperature fluctuations.

Various approaches have been made to improve the viscosity temperature behavior and shear stability of lubricating oils. One method involves incorporating polymeric additives, such as hydrogenated, substantially linear polymers derived from conjugated dienes, optionally copolymerized with monoalkenyl aromatic compounds. However, these polymers often exhibit reduced shear stability with increasing molecular weight. Consequently, formulation involves a compromise using larger amounts of lower molecular weight polymers that provide good shear stability, or smaller amounts of higher molecular weight polymers that tend to degrade under shear. In addition, the preparation of oil concentrates containing polymer levels above 10 wt.% poses processing challenges.

There remains a need for new polymer architectures to overcome the above limitations, with high viscosity index improvement, enhanced shear stability, and favorable solubility and processability, particularly in bio-based oils.

**SUMMARY**

In one aspect, the disclosure relates to: a hydrogenated coupled radial styrenic copolymer (HSBC) comprising at least three polymeric arms bonded to a nucleus, each arm being the same or different and consisting of a hydrogenated styrenic copolymer having a hydrogenated random copolymer segment (S / E / B) composed of vinyl aromatic (S), ethylene (E), and butylene (B) units. The hydrogenated coupled radial styrenic copolymer (HSBC) has a peak molecular weight (Mp) of 400 to 800 kg/mol, with each arm having a peak molecular weight (Mp) of 50 to 150 kg/mol. The HSBC has a residual unsaturation (RU) of less than 0.2 meq/g, a vinyl-aromatic content (VAC) of 30 to 50 wt. %, a butylene content of 30 to 50 wt. %, a vinyl aromatic blockiness index (VABI) of less than 10 % (all determined by $^1$H NMR), and a coupling efficiency of equal or greater than 80%.

In a second aspect, the hydrogenated coupled radial styrenic copolymer is represented by the formula $(S / E / B)_n X$. Block S / E / B is a hydrogenated copolymer of diene block derived from a butadiene and a vinyl aromatic monomer, n is an integer from 3 to 30, and X is a polyalkenyl coupling agent that forms a nucleus to which the polymeric arms are bonded.

In a third aspect, the hydrogenated coupled radial copolymer has an un-coupled arm fraction of less than 20%.

In a fourth aspect, an oil concentrate comprising 10 to 25 wt.% of a hydrogenated coupled radial styrenic copolymer and 75 to 90 wt.% of a bio-based oil selected from rapeseed oil, soybean oil, sunflower oil, sesame oil, avocado oil, almond oil, safflower oil, corn oil, cottonseed oil, olive oil, jojoba oil, wheat germ oil, linseed oil, ethylhexyl palmitate, ethyl hexyl stearate, capric triglyceride, and mixtures thereof. The oil concentrate has a kinematic viscosity at 25 °C of 4000 to 40,000 $mm^2$/s, measured in accordance with ASTM D445.

**DESCRIPTION**

The following terms will have the following meanings:

"Consisting essentially of" means that the composition primarily includes the recited components and may additionally contain one or more components that do not materially affect the novel characteristics or intended function of the invention. In embodiments, such additional components are present in amounts of < 30 wt.%, < 20 wt.%, or < 10 wt.%, based on total weight of the composition.

"Consisting of" refers to a composition that includes only the specifically listed components and excludes other components that materially affect the technical solution or distinctive function of the invention. However, the presence of other components in small amounts that do not materially affect the technical effect of the invention is not excluded, such as trace-level stabilizers, process residues, or solvents used during preparation.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other combinations of A, B, and C.

"Any of A, B, or C" refers to one option from A, B, or C, e.g., A only, B only, or C only.

"Any of A, B, and C" refers to one or more options from A, B, and C, e.g., A only, B only, C only, A and B, A and C, A and B and C, etc.

"Molecular weight" or $M_w$ refers to the polystyrene equivalent molecular weight in kg/mol of a polymer block or a block copolymer. $M_w$ can be measured with gel permeation chromatography (GPC) using polystyrene calibration standards, such as is done according to ASTM D5296-19. The GPC detector can be an ultraviolet or refractive index detector or a combination thereof. The chromatograph is calibrated using commercially available polystyrene molecular weight standards. $M_w$ of polymers measured using GPC are polystyrene equivalent molecular weights or apparent molecular weights, measured at the peak of the GPC trace, and commonly referred to as polystyrene equivalent "peak molecular weights," designated as $M_p$. Individual GPC block $M_w$ can be calculated by the difference of $M_p$ measured before and after the considered block polymerization. For example, $M_w$ of block B is the $M_p$ of species A-B minus the $M_p$ of block A.

"Hydrogenation level" ($H_2$%) refers to the level of saturation of the olefinic double bonds into the block copolymer, which can be determined using UV-VIS spectrophotometry and / or $^1$H NMR and / or via ozonolysis titration.

"Residual Unsaturation" (RU)" refers to the level of unsaturation, i.e., carbon-carbon double bonds per gram of block copolymer. RU can be measured using proton nuclear magnetic resonance spectroscopy ($^1$H NMR) or ozonolysis titration.

"Unit" when used in the concept of polymer unit or copolymer unit refers to repeating building blocks constituting the considered polymer or copolymer. Those polymer units are usually directly or indirectly related to the monomers that were polymerized or copolymerized to produce the polymer or copolymer.

"Vinyl aromatic unit content" or VAC of a block copolymer refers to the weight % of polymerized vinyl aromatic monomers, e.g., styrene in the block copolymer, calculated by dividing the sum of molecular weight of all vinyl aromatic units by total molecular weight of the block copolymer. VAC can be determined using proton nuclear magnetic resonance spectroscopy ($^1$H NMR). VAC can be used interchangeably with PSC (polystyrene content).

"Butylene unit content" refers to the content, in weight %, of the butylene units ("B") in a hydrogenated block copolymer. The butylene units are obtained by polymerization of 1,3-butadiene monomer via 1,2-addition, followed by hydrogenation. The 1,3-butadiene monomer can also polymerize through 1,4-addition, which upon hydrogenation results in ethylene units ("E"). Both butylene and ethylene units can be part of the hydrogenated block copolymer containing vinyl aromatic units, and in any order. Butylene unit and ethylene unit content can be measured by $^1$H NMR and $^{13}$C NMR.

"Coupling efficiency (CE)" refers to the weight of coupled polymer molecules divided by the total weight of both coupled and uncoupled polymer molecules, expressed as a percentage (%). CE can be used to determine the amount of un-coupled polymer content in the overall block copolymer. For example, if the coupling efficiency is 80%, the polymer will contain 20 wt.% uncoupled arm and 80 wt.% triblock and / or multi-arm blocks. CE can be determined from GPC data obtained in accordance with ASTM D5296 by integration of coupled and uncoupled peak areas.

"Vinyl Aromatic Blockiness Index" or "VABI" in the (co)polymer refers to the percentage of vinyl aromatic units in the polymer (SBC) that are directly next to another vinyl aromatic unit. VABI is measured using $^1$HNMR spectroscopy of the (co)polymer and is mathematically given by the expression:

$$\text{VABI} = 100 \text{ x (Integral-2 / Integral-1),}$$

wherein Integral-1 is determined by integrating the $^1$HNMR spectrum from 7.5 ppm to 6.0 ppm and dividing the result by 5; and Integral-2 is determined by integrating the $^1$HNMR spectrum of the signal minimum region between 6.9 ppm and 6.6 ppm? and dividing the result by 2.

"Polydispersity index" or PDI refers to a ratio of a weight average molecular weight ($M_w$) to a number average molecular weight ($M_n$), sometimes also called as molecular weight distribution. PDI is used to indicate distribution of polymer chain molecular weights in each polymer.

"Radial polymer" refers to a polymer having three or more arms or branches.

"Bio-based" refers to compounds that are obtained from renewable resources such as plants and contain either only or substantially renewable carbon.

"Nucleus" refers to the core or central part of the polymer from which multiple polymer chains (arms) emanate. The nucleus facilitates the formation of a multi-arm polymer structure by chemically linking or connecting two or more polymer arms through reactive sites.

"Average Viscosity Loss" (AVL) refers to the reduction in the oil's kinematic viscosity after being subjected to shear, as measured according to ASTM D6278. AVL is expressed as a percentage decrease relative to the oil's initial kinematic viscosity before shear. A lower AVL indicates improved shear stability, reflecting the oil's ability to maintain its viscosity, thus lubricating and protective performance under mechanical stress.

"Hydrogenated SBC" or "HSBC" refers to a styrenic block copolymer (SBC) in which diene units are hydrogenated to a level > 90 mol%, preferably > 95 mol%, or more preferably > 98 mol%, or < 100 mol%, and vinyl aromatic units are hydrogenated to < 20 mol%, preferably < 10 mol%, and more preferably < 5 mol%.

"Crystalline" refers to a polymer that exhibits measurable crystalline domains, as indicated by a detectable melting endotherm in differential scanning calorimetry (DSC) or by crystalline reflections in wide-angle X-ray scattering (WAXS). Crystalline polymers contain ordered segments that generally reduce their solubility in oils and lead to viscosity instability or gel formation at lower temperatures, resulting in non-transparent oils.

"Non-crystalline" refers to a polymer that does not exhibit measurable crystalline domains, evidenced by the absence of a melting endotherm in DSC and the absence of crystalline reflections in WAXS. Non-crystalline polymers are fully amorphous, show improved solubility in bio-based and lubricant oils, and provide more uniform and stable viscosity-modifying behavior across a broad temperature range, resulting in transparent oils.

The disclosure relates to a hydrogenated coupled radial styrenic copolymer with random copolymer and coupling characteristics, having multiple arms connected to at least one polyalkenyl coupling agent as a nucleus. In embodiments, the hydrogenated coupled radial styrenic copolymer functions as a viscosity index improver in oil compositions, particularly bio-based oil compositions including oil concentrates.

Hydrogenated Coupled Radial styrenic copolymer: The hydrogenated coupled radial styrenic polymer comprises a plurality of polymer arms, which may be identical or different. Each arm includes a hydrogenated random copolymer segment (S/E/B) composed of vinyl aromatic ("S"), ethylene ("E"), and butylene ("B") units. In embodiments, the overall polymer is represented by a structure $(S/E/B)_nX$, where n is an integer from 3 to 30 and X is a residue of a polyalkenyl coupling agent that serves as a central nucleus linking the polymer arms.

In its pre-hydrogenation state, each arm corresponds to a random styrene-butadiene copolymer, in which the butadiene-derived segment is subsequently hydrogenated to form ethylene and butylene units, while the styrene-derived units remain substantially unhydrogenated. The hydrogenation thus converts a (S / B) segment into a (S/E/B) segment.

The polybutadiene fraction of the copolymer is derived from polymerized conjugated diene monomers, primarily 1,3-butadiene, which may contain up to 10 wt. % of structurally related conjugated dienes such as 2,3-dimethyl-1,3-butadiene, 1,3-pentadiene, or 1,3-hexadiene.

The vinyl aromatic monomer for the S fraction of the copolymer is selected from styrene, o-methylstyrene, p-methylstyrene, p-tert-butylstyrene, $\alpha$-methylstyrene, and combinations thereof.

Prior to hydrogenation and coupling, the polymer arms exist as living random copolymers represented by S-B-M, where M denotes a carbanionic terminus (e.g., lithium). The living copolymers react with a polyalkenyl coupling agent to form a radial structure. Nucleus X originates from this coupling agent, which may be an aliphatic or an aromatic divinyl compound containing two or more reactive vinyl groups capable of linking multiple arms to a single center (nucleus).

Examples of suitable aliphatic divinyl compounds include 1,4-hexadiene, 1,5-hexadiene, 1,7-octadiene, divinyl ether, ethylene glycol divinyl ether, diethylene glycol divinyl ether, divinyl adipate, divinyl succinate, divinyl urea, divinyl carbonate, divinyldimethylsilane, divinyl tetramethyldisiloxane, and divinyl octane, and mixtures thereof. Examples of aromatic divinyl compounds include divinylbenzene (DVB), ethylvinylbenzene (EVB), 1,3-, 1,4-, 1,5-, 1,8-, 2,3-, 2,6-, and 2,7-divinylnaphthalenes, as well as various divinylbiphenyl isomers (e.g., 4,4'-, 4,3'-, 3,3'-, 2,2'-, 2,4-divinylbiphenyl), 1,2-divinyl-3,4-dimethylbenzene, and 1,3-divinyl-4,5,8-tributylnaphthalene. In embodiments, DVB is used as the preferred coupling agent.

The coupling agent can be added in an amount of 0.5-15 moles per mole of living polymer chains (based on the total moles of carbanionic termini), for example 1-10, 1.5-7.5, or 2-5 moles. The resulting hydrogenated coupled radial styrenic copolymer may have 3-30 arms, such as 5-25, 7-20, or 4-15, or 8-15 arms, and a coupling efficiency of ≥75 %, or ≥80 %, or ≥85 %, or ≥87 %, or ≥88 %, or ≥90 %.

In embodiments, each arm of the hydrogenated coupled radial styrenic copolymer has a peak molecular weight of 30-150 kg/mol, or 40-140 kg/mol, or 50-150 kg/mol, or 55-125 kg/mol, 55-110 kg/mol, or 30- 120 kg/mol, or 30-90 kg/mol, or 30-75 kg/mol, or 30-60 kg/mol, measured with GPC according to ASTM D5296-19.

In embodiments, the hydrogenated coupled radial styrenic copolymer has a peak molecular weight of 300-900 kg/mol, or 400-800 kg/mol, 350-700 kg/mol, or 375-650 kg/mol, measured with GPC according to ASTM D5296-19.

In embodiments, the hydrogenated coupled radial styrenic copolymer has a vinyl aromatic unit content (VAC) of 30-50%, or 35-48%, 38-45% or > 30 % or < 50 %, measured by $^1$H NMR.

In embodiments, the hydrogenation level of the butadiene-derived unit exceeds 80 %, such as >85 %, >90 %, >95 %, >98 %, or ≥99 %, or up to 100%, based on total double bonds in the diene units. The residual unsaturation (RU) after hydrogenation may be 0 - 0.5 meq/g, 0.05 - 0.5 meq/g, or < 0.5 meq/g, or < 0.4 meq/g, or < 0.3 meq/g, or < 0.2 meq/g, or < 0.1 meq/g, based on total butadiene-derived units as measured by $^1$H NMR.

In embodiments, in the S / E / B segment, the 1,2-addition content or butylene content of (butadiene becomes butylene unit upon hydrogenation) is in the range of 30-50 wt. %, or 35-50 wt. %, or 40-50 wt. %, or 35-45 wt. % based on total butadiene-derived units.

In embodiments, the hydrogenated coupled radial styrenic copolymer contains <20 % uncoupled arms (linear chains), for example < 18, or <15 %, or <10 %, or <5 %, as determined by GPC.

In embodiments, the hydrogenated coupled radial styrenic copolymer has a vinyl aromatic blockiness index (VABI) of <15 %, such as <12 %, <10 %, or <8 %, or <5 %, measured by $^1$H NMR.

Method for Making Hydrogenated Coupled Radial Styrenic Copolymer: The hydrogenated coupled radial styrenic copolymer is obtained by: (i) polymerizing one or more conjugated diene monomers and one or more vinyl aromatic monomers in solution in the presence of an initiator and 1,3-butadiene structure modifier to form a living copolymer precursor, (ii) reacting with a polyalkenyl coupling agent to form a multi-arm (radial) copolymer, and (iii) hydrogenating the radial copolymer to form a hydrogenated radial copolymer.

In embodiments, the vinyl aromatic compound used in the preparation of living copolymer precursor is in the amount of < 50 %, < 40 %, or > 30%, by weight, or from 30 % to 50 % by weight, relative to the total weight of the monomers.

The living random copolymers are prepared by the stepwise polymerization of one or more conjugated diene monomers and one or more vinyl aromatic monomers in a hydrocarbon solvent using an anionic polymerization initiator. In the stepwise process, the conjugated diene and vinyl aromatic monomers are polymerized in the presence of the initiator and an optional microstructure-modifying agent to form a living block copolymer precursor generally represented by the formula polybutadiene (B) / polystyrene (S)-M, where M denotes the carbanionic end group derived from the initiator (e.g., lithium).

In embodiments, the composition, sequence distribution, and microstructure of the random copolymer segment are controlled by the mode of monomer addition and the presence of one or more randomizers. For example, the more reactive monomer may be gradually added to a polymerization reaction mixture initially containing the less reactive monomer or a mixture of both monomers, such that the molar ratio of monomers in the reaction mixture remains controlled throughout the polymerization. Alternatively, a mixture of the monomers to be copolymerized may be gradually added to the polymerization mixture. In further embodiments, polymerization is carried out in the presence of a randomizer, which is a polar compound that does not deactivate the catalyst system and promotes random copolymerization. Suitable randomizers include tertiary amines such as trimethylamine, triethylamine, dimethylethylamine, tri-n-propylamine, tri-n-butylamine, dimethylaniline, pyridine, quinoline, N-ethylpiperidine, and N-methylmorpholine; thioethers such as dimethyl sulfide, diethyl sulfide, di-n-propyl sulfide, di-n-butyl sulfide, and methyl ethyl sulfide; and ethers such as dimethyl ether, methyl ethyl ether, diethyl ether, di-n-propyl ether, di-n-butyl ether, dioctyl ether, dibenzyl ether, diphenyl ether, anisole, 1,2-dimethoxyethane, o-dimethoxybenzene, and cyclic ethers such as tetrahydrofuran. Additional suitable randomizers include 1,3-diethoxypropane.

The living B / S copolymer reacts with a polyalkenyl coupling agent to form the multi-arm (radial) copolymer, with the polyalkenyl as the nucleus.

The radial copolymer in step (iii) is then hydrogenated. The hydrogenation of the radial copolymer is conducted with a suitable catalyst containing noble metals or non-noble metal compounds of Group VIII of the IUPAC periodic table and a suitable hydrocarbon solvent. The hydrogenated coupled radial copolymer is subsequently recovered in a solid form, for use as a viscosity modifier. In embodiments, the conjugated diene fraction of the radial B / S copolymer is hydrogenated to a hydrogenation level of > 80, or > 85, or > 90, or > 95, or > 98, or > 99, or up to 100%, based on total double bonds present in the polymerized conjugated diene monomer fraction.

Properties of the Hydrogenated Coupled Radial Styrenic Copolymer. The hydrogenated coupled radial styrenic copolymer described herein is characterized by a fully amorphous, non-crystalline morphology, high thermal and oxidative stability, and resistance to structural degradation under mechanical or thermal stress. These properties enable their use across a wide range of formulation environments.

Amorphous and Non-Crystalline Character. In embodiments, the polymer shows no measurable melting endotherm by differential scanning calorimetry and no crystalline reflections by wide-angle X-ray scattering, confirming the absence of crystalline domains. The amorphous morphology is maintained over temperatures from approximately -40 °C to at least 150 °C. Unlike comparative hydrogenated linear styrenic block copolymers that crystallize upon cooling and form opaque, paste-like phases, the present polymer remains clear and non-crystalline.

Thermal and Oxidative Stability. The polymer remains stable under extended thermal exposure, consistent with its high degree of saturation and absence of crystallizable sequences. In embodiments, the polymer retains its amorphous character after heating at 80-175 °C for at least 2-4 hours and after repeated thermal cycling between 0-25 °C and 120-140 °C, exhibiting no crystallization, phase separation, or visible change in appearance.

Solubility and Solution Stability. The polymer dissolves readily in a wide range of organic media, including non-polar, moderately polar, and ester-based solvents, when heated to 80-175 °C and subsequently cooled to 0-25 °C. Clear and homogeneous solutions are obtained at polymer concentrations of 1-5 wt.%, with little or no haze or sedimentation observed after storage for 7-30 days at ambient conditions.

Cohesive Behavior at Higher Concentrations. At higher concentrations of the polymer in an organic medium such as solutions, dispersions, or gels prepared in non-polar, moderately polar, or ester-based solvents or oils typically in the range of 5-25 wt.% polymer based on the total weight of the polymer-solvent or polymer-oil mixture, the material forms transparent, cohesive, elastic-free networks whose rheological characteristics reflect the multi-arm radial architecture rather than any block-domain crystallization. These concentrated mixtures maintain visual clarity and remain homogeneous over repeated thermal cycles between 0-25 °C and 120-140 °C, demonstrating the robustness of the polymer's amorphous structure during both processing and storage.

End-Use Applications: The hydrogenated coupled radial styrenic copolymer described herein, by virtue of its fully amorphous, non-crystalline morphology, high coupling efficiency, is characterized as being able to form clear, elastic-free, shear-stable gels in both bio-based and fossil-derived oils at low polymer loading. The copolymer is suitable for use in a wide range of lubricant, fluid-handling, rheology-modification, and oil-structuring applications.

In embodiments, the copolymer is employed as a viscosity-index improver, thickener, film-former, or rheology modifier in biodegradable, semi-synthetic, or mineral-oil-based formulations. Representative applications include, but are not limited to: hydraulic fluids, gear oils, engine oils, motor oils, industrial lubricants, circulating oils, slideway oils, compressor oils, turbine oils, transformer oils, outboard-motor oils, two-stroke oils, agricultural and construction-equipment lubricants, forestry lubricants, chainsaw oils, metalworking fluids, drilling and mining lubricants, and greases formulated with natural, synthetic, or mixed-oil systems.

The copolymer is further suitable for forming oleogels and structured-oil systems for use in personal-care products, cosmetic formulations, fragrance gels, anhydrous balms, and topical-delivery compositions, owing to its excellent compatibility with vegetable oils, polyol esters, triglycerides, and emollient esters.

Because the copolymer produces stable, transparent, non-crystalline gels that maintain viscosity under mechanical shear and temperature fluctuations, it may also be employed in food-processing lubricants (e.g., H1/H2 categories), medical and device lubricants, textile-processing oils, and environmentally acceptable lubricants (EALs). Additional uses include seed-coating binders, agrochemical carriers, controlled-release matrices, coating and ink vehicles, pigment-dispersion media, oil-based binders, pressure-sensitive adhesive (PSA) systems, specialty sealants, and oil-thickened protective films.

These examples are illustrative, and the copolymer can be used in any application requiring an oil-soluble, shear-stable, non-crystalline radial copolymer capable of imparting controlled viscosity, improved viscosity-temperature behavior, and resistance to shear degradation.

Bio-based Oil Applications: In embodiments, the hydrogenated coupled radial styrenic copolymer is as a viscosity modifier for bio-based oil. In this application, a solution of the hydrogenated coupled radial styrenic copolymer in cyclohexane is diluted with a bio-based oil, and the cyclohexane is subsequently removed for an oil concentrate containing 0.5-30 wt.%, 1-25 wt.%, 2-25 wt.%, 5-25 wt.%, 10-25 wt.%, 15-25 wt.%, 15-20 wt.%, or 2-15 wt.% of the copolymer as a viscosity modifier.

Examples of bio-based oils include animal and vegetable oils. Examples include rapeseed oil (also known as canola oil), soybean oil, sesame oil, avocado oil, almond oil, safflower oil, corn oil, cottonseed oil, olive oil, jojoba oil, wheat germ oil, linseed oil, ethylhexyl palmitate, ethylhexyl stearate, caprylic / capric triglyceride, sunflower seed oil, fish oil, tallow oil, lanolin oil, and mixtures thereof.

In embodiments, the amount of bio-based oil present in the oil concentrate is 70-99.5 wt.%, 70-99 wt.%, 78-98.9 wt.%, 75-90 wt.%, greater than 70 wt.%, or less than 99.5 wt.%, based on the total weight of the oil concentrate.

In embodiments, the oil concentrate is further diluted with a diluent oil which can be a fossil-based oil, or a second bio-based oil, which is the same or different from the bio-based oil for use in the oil concentrate. The amount of oil concentrate present in the diluted composition is 1-20 wt.%, or 2-18 wt.%, or 10-20 wt.%. In embodiments, the diluted composition contains 0.1-5 wt.%, or 0.2-5 wt.%, or 0.5-5 wt.% of the hydrogenated coupled radial styrenic copolymer. The diluted composition is suitable for use in lubricant oils and in other bio-based or mixed-oil lubricant systems.

Optional Components: The oil concentrate or the diluted composition optionally includes one or more additional components such as stabilizers (e.g., antioxidants), adhesion promoters, ultraviolet-light stabilizers, rheology modifiers, biocides, corrosion inhibitors, dehydrators, colorants (e.g., pigments and dyes), fillers, surfactants, flame retardants, and combinations thereof.

In embodiments, antioxidants are selected from but not limited to, e.g., pentaerythritol tetrakis[3-(3,5-di-tert-butyl-4-hydroxyphenyl)propionate], 3,3',3',5,5',5'-hexa-tert-butyl-a,a',a'-(mesitylene-2,4,6-triyl) tri-p-cresol, 2,2'-methylene bis(4-methyl-6-tertbutylphenol), phosphites including, e.g., tris-nonylphenyl-phosphite (TNPP) and bis(2,4-di-tert-butylphenyl)4,4'-diphenylene-diphosphonite,distearyl 3,3'-thiodipropionate (DSTDP), Butylated hydroxytoluene (BHT), butylated hydroxyanisole (BHA), tertiary-butylhydroquinone (TBHQ), and combinations thereof.

In embodiments, the optional components are present in an amount of 0 - 35, or 0.5 - 25, or 0.1 - 15, or 1 - 10, or 2 - 8, or < 5 wt.%, based on the total weight of the oil concentrate.

The oil concentrates can be prepared by blending bio-based oil(s) with the hydrogenated coupled radial styrenic copolymer using any conventional mixing apparatus, with the components being added in any order, or simultaneously at an elevated temperature. In embodiments, the mixing is at a temperature of 80-175° C.

Properties of the Oil Concentrate: In embodiment, an oil concentrate comprising 1-25 wt.%, or 10-25 wt.% of the hydrogenated coupled radial styrenic copolymer, 75-98.9 wt.%, or 75-90 wt.% of a bio-based oil (e.g., rapeseed oil), and up to 0.5 wt.% of a stabilizer.

In embodiments, the oil concentrate has a kinematic viscosity at 25°C, from 1500-40,000 mm$^2$/s, or 2000-40,000, or 2500-40,000, or 4000-40,000, or 5000-40,000, or 5000-39,000, or 5000-38,000, or 5000-35,000, or < 40,000, or < 35,000, or > 5000, or > 10,000, > 15000 mm$^2$/s as measured in accordance with ASTM D445.

Properties of Diluted Oil Composition: In embodiments, a diluted oil composition (as prepared from an oil concentrate) containing the hydrogenated coupled radial styrenic copolymer in an amount of 0.5 - 5%, or 0.5 - 3%, or 0.5 - 2% exhibits one or more, or all, of the following properties:

an Average Viscosity Loss (AVL) of < 25%, or < 20 %, 1-20 %, or 2-15%, or 3-12%, or < 18%, or < 15%, or < 10%, measured in accordance with ASTM D6278.

a viscosity index (VI) of 150-400, or 180-350, or 200-300, or 200-280, or 200-265, or 200-250, or 200-235, measured in accordance with ASTM D2270.

a kinematic viscosity ($KV_{100}$) of 3-30, or 5-28, or 8-25, or 10-30, or 10-20 mm$^2$/s, measured in accordance with ASTM D445.

Uses of Bio-based Oil Composition: An oil composition containing the hydrogenated coupled radial styrenic copolymer a viscosity modifier is suitable for use in in various applications such as a chain saw oil, hydraulic fluid, outboard motor oil, sawmill oil, and transformer fluid. A concentrate oil composition can also be incorporated as an engine-oil additive into transportation, agriculture, construction, industrial machinery, refinery operations, and oil-field applications.

(Analytical Methods): The hydrogenated coupled radial styrenic copolymer in the form of a solid, pellet, bale, crumb, powder, or as part of a composition from which the copolymer can be separated by routine solvent extraction (e.g., an oil concentrate or a diluted composition), can be characterized as described herein.

The peak molecular weight (Mp) of the radial copolymer and the peak molecular weight of each arm can be determined by size-exclusion chromatography (SEC) using calibration to polystyrene standards in accordance with ASTM D5296-19. The SEC chromatogram exhibits a lower-molecular-weight peak corresponding to uncoupled arm species and a higher-molecular-weight peak corresponding to coupled (multi-arm) species. The uncoupled-arm fraction is determined by integrating the area of the uncoupled-arm peak relative to the total integrated chromatographic area. The coupling efficiency (CE%) is determined by integrating the area of the coupled-species peak and dividing by the total integrated area. These measurements confirm the radial architecture and the proportion of coupled and uncoupled species.

The microstructure of the hydrogenated styrenic copolymer is assessed by $^1$H NMR spectroscopy performed at 400-600 MHz in CDCl$_3$ or another deuterated solvent. Integration of the aromatic proton resonances (≈6.3-7.2 ppm) relative to aliphatic resonances provides the vinyl-aromatic content (VAC). The disappearance or substantial reduction of olefinic proton signals at 5.0-5.6 ppm confirms a residual unsaturation (RU) below 0.2 meq/g. Integration of the aliphatic methylene and methyl resonances (≈0.8-2.2 ppm) provides the butylene content and allows calculation of the vinyl-aromatic blockiness index (VABI), with VABI values below 10% indicating predominantly block-type incorporation.

The number of polymeric arms (n) and the overall radial structure are determined using SEC equipped with multi-angle light scattering (MALS), differential viscometry, or triple-detector configurations. Comparison of molecular weight and hydrodynamic volume to those of a linear reference polymer of comparable composition provides the branching index, confirming the presence of three or more arms bonded to a common nucleus.

For an oil concentrate (or a diluted oil composition) containing the hydrogenated coupled radial styrenic copolymer, the copolymer content may be quantified by solvent extraction followed by gravimetric analysis. The kinematic viscosity of such compositions is measured in accordance with ASTM D445 at 25 °C, and the viscosity index (VI) is calculated in accordance with ASTM D2270 using viscosities measured at 40 °C and 100 °C. The average viscosity loss (AVL%) is determined according to ASTM D6278 using a tapered-roller bearing test or an equivalent mechanical shear-stability method.

(Amorphous Morphology): The amorphous or non-crystalline character of the hydrogenated coupled radial styrenic copolymer is evaluated by differential scanning calorimetry (DSC) using ASTM D3418 at a heating rate of 10 °C/min and by wide-angle X-ray scattering (WAXS) using Cu Kα radiation. A polymer is considered amorphous when no melting endotherm greater than 0.2 J/g is detected in the range of -20 °C to 230 °C and when the WAXS pattern exhibits only a broad amorphous halo without discrete crystalline reflections.

(Thermal-Cycling Assessment): Retention of amorphous character is determined after heating the polymer at 80-175 °C or after thermal cycling between 0-25 °C and 120-140 °C for multiple cycles. DSC and WAXS analyses can be used to confirm retention when no melting endotherm or crystalline reflections appear following thermal treatment.

(Homogeneous Solution Test): Homogeneity is assessed by dissolving the polymer at 1-5 wt.% in an organic medium (e.g., toluene or xylene), heating to 80-175 °C for 2-4 hours, and cooling to ambient temperature. A solution is "homogeneous" when no phase separation, precipitation, or visible scattering is observed by visual inspection or optical microscopy.

(Transparent Solution Test): Transparency is evaluated on the same 1-5 wt.% solutions using a 1-cm cell and UV-visible spectroscopy. A solution is "transparent" when percent transmittance at 600 nm is at least 85 % and no visible haze

is observed.

<u>Examples</u>: The following illustrative examples are intended to be nonlimiting.

<u>The Components Used in Examples Include:</u>

Bio-based oil- technical grade rapeseed oil.

Stabilizer 1: Pentaerythritol tetrakis[3-[3,5-di-tert-butyl-4-hydroxyphenyl]propionate.

Stabilizer 2: 3,3',3',5,5',5'-hexa-tert-butyl-a,a',a'-(mesitylene-2,4,6-triyl) tri-p-cresol.

<u>Examples</u>: Polymers 1 to 5 are comparative polymers (Comp. Poly. 1 to 5), hydrogenated diblock SBCs (copolymer based on styrene and ethylene/butylene units).

Table 1

| Comp. Poly. | Mp S-S/E/B (kg/mol) | Mp S/E/B (kg/mol) | Mp S (Kg/mol) | Butylene Content (wt.%) | VAC (S/E/B) (wt.%) | VAC total (wt.%) | Blockiness VABI (%) S/E/B | Phase behavior |
|---|---|---|---|---|---|---|---|---|
| 1 | 180 | 125 | 55 | 22.9 | 37 | 56.3 | 4.2 | crystalline |
| 2 | 192.9 | 93.9 | 99 | 24.0 | 37.6 | 74.5 | 6.5 | crystalline |
| 3 | 186.4 | 89.3 | 97.1 | 21.5 | 20.0 | 62.0 | 8.3 | crystalline |
| 4 | 182.2 | 89.5 | 92.7 | 21.6 | 29.2 | 65.0 | 2.75 | crystalline |
| 5 | 173 | 115.3 | 57.7 | 20.4 | 20.4 | 57.7 | 4.9 | crystalline |
| * VAC, butylene content, RU, VABI -blockiness index determined by $^1$H NMR. | | | | | | | | |

Comparative polymers 1 to 5 when added to the oil compositions, these polymers cause the mixture to become an opaque, paste-like material upon cooling, which eventually separates into a free oil layer and a dense paste layer. This undesired solid phase (dense paste layer) is attributed to the crystallization of rubber polymer chains with low polystyrene (PS) content and low butylene content.

<u>Polymers 6 to 8</u>: Polymers 6 to 8 (Poly. 6-8) are hydrogenated coupled radial styrenic copolymers. The polymers are prepared as follows:

<u>Poly-6</u>: Poly-6 was prepared in three steps: polymerization, coupling, and hydrogenation. A jacketed, nitrogen-purged reactor equipped with mechanical stirring and temperature control was charged with cyclohexane (3.5 kg) and a combined monomer feed of 1,3-butadiene and styrene in proportions selected to achieve a target arm molecular weight of approximately 62,000 g/mol and a vinyl-aromatic content of 36-37 wt.%. A butadiene microstructure modifier, diethoxypropane, was introduced at a DEP/Li molar ratio of less than 1, more specifically 0.15, to promote random incorporation of the monomers. After drying and purging the reactor with an inert gas (such as nitrogen or argon), the contents were heated to 50-60 °C and polymerization was initiated by adding sec-butyllithium (s-BuLi) in an amount calculated to provide the desired arm molecular weight. Polymerization proceeded for 45-90 minutes until complete monomer conversion was confirmed by gas chromatography, yielding a living random styrene-butadiene precursor (S/B-Li).

For the coupling step, the reactor temperature was adjusted to 45-55 °C and a solution of divinylbenzene (0.5-2.5 equivalents relative to living chain ends) in cyclohexane was added gradually under stirring. The mixture was held for 30-60 minutes to allow formation of a radial (multi-arm) polymer, and gel permeation chromatography confirmed a coupling efficiency of approximately 90%. The coupled polymer cement was then transferred to a hydrogenation vessel and charged with a nickel-based hydrogenation catalyst (e.g., Ni/Al) at a loading of 20-200 ppm Ni. Hydrogenation was performed at 50-70 °C under 300-700 psi hydrogen pressure until the residual unsaturation (RU) was reduced to <0.05 meq/g, as determined by $^1$H NMR. The hydrogenated polymer was recovered by steam stripping followed by vacuum drying to obtain Poly-6 as a solid material having a radial peak molecular weight (Mp) of approximately 440 kg/mol. All additional polymer characteristics are summarized in Table 2.

<u>Poly-7</u>: Poly-7 was prepared according to the procedure described for Poly-6, except that the monomer-to-initiator ratio was adjusted to target a higher arm molecular weight and a final radial peak molecular weight of approximately 601 kg/mol. The remaining analytical characteristics of Poly-7 are reported in Table 2.

<u>Poly-8</u>: Poly-8 was prepared using the same polymerization, coupling, and hydrogenation steps described for Poly-6, except that the monomer-to-initiator ratio was further adjusted to obtain the highest arm molecular weight among Polymers 6-8, corresponding to a radial peak molecular weight of approximately 665 kg/mol. All additional polymer characteristics of Poly-8 are provided in Table 2.

Table 2 presents the average molecular weight of each S/E/B arm ($Mp_{arm}$), the polymer structure and its peak molecular weight ($Mp_{radial}$), and other relevant polymer properties such as VAC, butylene content, and residual unsaturation (RU) of the hydrogenated coupled radial styrenic copolymer. It is noted that Polymers 6 to 8 when added

EP 4 772 544 A1

to the oil compositions, do not show the undesirable crystallinity observed with Comparative Polymers 1-5 as indicated above.

Table 2

| Poly | Mp$_{arm}$ S/E/B kg/mol | Mp$_{radial}$ (S/E/B)nX kg/mol | VAC (wt.%) | Butylene Content wt.% | RU (meq/g) | Blockiness VABI (%) S/E/B | CE (%) | Phase behavior |
|---|---|---|---|---|---|---|---|---|
| 6 | 62,000 | 440,000 | 36.7 | 39.6 | 0.04 | 4.1 | 90 | non-crystalline |
| 7 | 93,000 | 601,000 | 36.8 | 39.6 | 0 | 2.8 | 87 | non-crystalline |
| 8 | 107,000 | 665,000 | 37.0 | 39.9 | 0.06 | 3.2 | 88 | non-crystalline |
| *n=3-30, and X-coupling agent; VAC, butylene content, RU, VABI -blockiness index determined by $^1$H NMR. | | | | | | | | |

Example 1 (Ex. 1): The concentrate was prepared by dissolving 10 wt. % of the hydrogenated coupled radial styrenic copolymer-6 (Poly-6), and 0.1 wt.% stabilizer 1 in 89.9 wt.% of hot rapeseed oil under continuous stirring at 120-140°C. The mixture was stirred for 4 hours or until the polymer was fully dissolved. The resulting oil composition was cooled to room temperature and subjected to further test, e.g., kinematic viscosity measurements.

Example 2 (Ex. 2): The general procedure of Example 1 was repeated, substituting Poly-6 with Poly-7. Compositions containing 15 wt.% polymer were prepared as summarized in Table 3.

Table 3 summarizes the effect of polymer concentration on the kinematic viscosity at 25 °C (KV$_{25}$) for oil concentrates (compositions) formulated with hydrogenated coupled radial polymers Poly-6, and Poly-7 at 10-15 wt.% polymer loading and 0.1 wt.% stabilizer. The results (with polymer concentration of 10 and 15 wt.%) demonstrate the strong thickening efficiency of these polymers in rapeseed oil.

Table 3

| Polymer Conc (wt.%) | Oil Conc wt.% | Poly-6 KV$_{25}$ (mm$^2$/s) | Poly-7 KV$_{25}$ (mm$^2$/s) |
|---|---|---|---|
| 1.0 (*comp.) | 98.9 | 97 | 105 |
| 1.7 (*comp.) | 98.2 | 135 | 159 |
| 5.0 (*comp.) | 94.9 | 661 | 1085 |
| 10.0 | 89.9 | 5000 | 12555 |
| 15.0 | 84.9 | 22200 | 33000 |
| (*comp.- comparative lower polymer concentration) | | | |

It should be noted that the kinematic viscosity (table 3) of oils containing the hydrogenated coupled radial styrenic copolymers remains independent of the applied shear rate, unlike oils containing hydrogenated diblock S/E/B copolymers, which exhibit shear-thinning behavior.

The properties of the diluted oil composition prepared in Examples 4-6, each containing 1.7 wt.% of the oil concentrate containing 0.5 to 5 wt. % of hydrogenated coupled radial styrenic copolymers (6-8), are summarized in Table 4. Table 4 reports key performance parameters, including kinematic viscosity, AVL %, and viscosity index, for the diluted formulations in lubricant oil or other bio-based oils, with additives included as the remainder of the formulation. For comparison, the corresponding properties of neat rapeseed oil are also provided.

Table 4

| Examples | Polymer Conc (wt.%) | Oil Conc (wt.%) | Viscosity index | KV$_{100}$ (mm$^2$/s) | AVL (%) |
|---|---|---|---|---|---|
| Ex. 4 | 1.7 | 98.2 | 243 | 17 | 3 |
| Ex. 5 | 1.7 | 98.2 | 228 | 20 | 11 |
| Ex. 6 | 1.7 | 98.2 | 283 | 22 | 24 |
| Rapeseed oil | - | 100 | 200 | 8.2 | 0.1 |

**Claims**

1. A hydrogenated coupled radial styrenic copolymer comprising at least three polymeric arms bonded to a nucleus, each arm being the same or different and consisting of a hydrogenated styrenic copolymer having a hydrogenated random copolymer segment (S / E / B) composed of vinyl aromatic (S), ethylene (E), and butylene (B) units, each arm having a peak molecular weight (Mp) of 50 to 150 kg/mol, measured according to ASTM D5296-19;
   wherein the hydrogenated coupled radial styrenic copolymer has:

   a peak molecular weight (Mp) of 400 to 800 kg/mol, measured according to ASTM D5296-19,
   a residual unsaturation (RU) of less than 0.2 meq/g, determined by $^1$H NMR,
   a butylene content of 30 to 50 wt. %, determined by $^1$H NMR,
   a vinyl-aromatic content of 30 to 50 wt. %, determined by $^1$H NMR,
   a vinyl aromatic blockiness index (VABI) of less than 10 %, determined by $^1$H NMR, and
   a coupling efficiency of equal or greater than 80 %, measured according to ASTM D5296-19.

2. The hydrogenated coupled radial styrenic copolymer of claim 1, wherein the hydrogenated coupled radial styrenic copolymer is represented by the formula $(S/E/B)_nX$,
   where block (S /E/ B) is a hydrogenated random copolymer segment composed of vinyl aromatic (S), ethylene (E), and butylene (B) units, n is an integer from 3 to 30, and X is a polyalkenyl coupling agent that forms the nucleus to which the polymeric arms are bonded.

3. The hydrogenated coupled radial styrenic copolymer of any of claims 1-2, wherein each arm has a peak molecular weight ($M_p$) of 55 to 110 kg/mol.

4. The hydrogenated coupled radial styrenic copolymer of any of claims 1-2, wherein the hydrogenated coupled radial styrenic copolymer has a butylene content of 40 to 50 wt. %.

5. The hydrogenated coupled radial styrenic copolymer of claim 2, wherein n is an integer from 4 to 15, and the polyalkenyl coupling agent is an aromatic divinyl compound selected from the group consisting of divinylbenzene, ethylvinylbenzene, and divinylnaphthalene isomers.

6. The hydrogenated coupled radial styrenic copolymer of any of claims 1-2, wherein the nucleus is a polyalkenyl coupling agent which is an aromatic divinyl compound selected from the group consisting of: divinylbenzene, ethylvinylbenzene, 1,3-divinylnaphthalene, 1,8-divinylnaphthalene, 1,4-divinylnaphthalene, 1,5-divinylnaphthalene, 2,3-divinylnaphthalene, 2,7-divinylnaphthalene, 2,6-divinylnaphthalene, 4,4'-divinylbiphenyl, 4,3'-divinylbiphenyl, 4,2'-divinylbiphenyl, 3,2'-divinylbiphenyl, 3,3'-divinylbiphenyl, 2,2'-divinylbiphenyl, 2,4-divinylbiphenyl, 1,2-divinyl-3,4-dimethylbenzene, 1,3-divinyl-4,5,8-tributylnaphthalene, 2,2'-divinyl-4-ethyl-4'-propylbiphenyl, and mixtures thereof.

7. The hydrogenated coupled radial styrenic copolymer of any of claims 1-2, wherein the nucleus is a polyalkenyl coupling agent which is an aliphatic divinyl compound selected from the group consisting of: 1,4-hexadiene, 1,5-hexadiene, 1,7-octadiene, divinyl ether, ethylene glycol divinyl ether, diethylene glycol divinyl ether, divinyl adipate, divinyl succinate, divinyl urea, divinyl carbonate, divinyldimethylsilane, divinyl tetramethyldisiloxane, divinyl octane, and mixtures thereof.

8. The hydrogenated coupled radial styrenic copolymer of any of claims 1-2, wherein the hydrogenated coupled radial styrenic copolymer has an uncoupled arm fraction of less than 20%, measured according to ASTM D5296-19.

9. The hydrogenated coupled radial styrenic copolymer of any of claims 1-2, wherein the hydrogenated coupled radial styrenic copolymer has a number of arms ranging from 3 to 30.

10. The hydrogenated coupled radial styrenic copolymer of any of claims 1-2, wherein the hydrogenated coupled radial styrenic copolymer has a vinyl aromatic blockiness index of less than 5%, as determined by $^1$H NMR.

11. The hydrogenated coupled radial styrenic copolymer of any of claims 1-2, wherein the hydrogenated coupled radial styrenic copolymer has a coupling efficiency of equal or greater than 88%.

12. The hydrogenated coupled radial styrenic copolymer of any of claims 1-2, wherein the hydrogenated coupled radial styrenic copolymer has one or more of:

an amorphous, non-crystalline morphology, including no measurable melting endotherm and no crystalline reflections by wide-angle X-ray scattering;

retention of amorphous character after heating at 80-175 °C and after repeated thermal cycling between 0-25 °C and 120-140 °C;

forming a homogeneous solution at a polymer concentration of 1-5 wt.% in an organic medium upon heating to 80-175 °C for 2-4 hours and subsequent cooling to ambient temperature; and

forming a transparent solution at a polymer concentration of 1-5 wt.% in an organic medium upon heating to 80-175 °C for 2-4 hours and subsequent cooling to ambient temperature.

13. An oil concentrate comprising:

(a) 10 to 25 wt.% of a hydrogenated coupled radial styrenic copolymer according to any of claims 1-12; and

(b) 75 to 90 wt.% of a first bio-based oil selected from rapeseed oil, soybean oil, sunflower oil, sesame oil, avocado oil, almond oil, safflower oil, corn oil, cottonseed oil, olive oil, jojoba oil, wheat germ oil, linseed oil, ethylhexyl palmitate, ethyl hexyl stearate, capric triglyceride, and mixtures thereof; and

wherein the oil concentrate has a kinematic viscosity at 25 °C of 4000 to 40,000 $mm^2$/s, measured in accordance with ASTM D445.

14. A diluted oil composition comprising the oil concentrate of claim 13 in an amount of 10-20 wt. %, and 80-90 wt.% of a diluent oil selected from the group consisting of:

(i) a fossil-based oil,

(ii) a second bio-based oil different from the first bio-based oil and selected from the group consisting of: castor oil, palm oil, tall oil, fish oil, algal oil, and mixtures thereof, and

(iii) mixtures of (i) and (ii); and

wherein the diluted oil composition has:

an average viscosity loss of less than 25 %, measured in accordance with ASTM D6278;

a viscosity index (VI) of 150-400, measured in accordance with ASTM D2270; and

a kinematic viscosity ($KV_{100}$) of 3-30 $mm^2$/s at 100 °C, measured in accordance with ASTM D445.

15. The diluted oil composition of claim 14, wherein the hydrogenated coupled radial styrenic copolymer of claim 13 is present in an amount of 0.5 to 5 wt.% of the composition.

## EUROPEAN SEARCH REPORT

**Application Number**

EP 25 22 3693

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 010 585 B1 (KRATON POLYMERS US LLC [US]) 9 September 2009 (2009-09-09) * claims 1-10; example 3; tables 2-3, 8 * ----- | 1-15 | INV. C08F8/04 C08F297/04 |
| A | US 6 451 913 B1 (MASSE MICHAEL ALAN [US]) 17 September 2002 (2002-09-17) * claims 1-18; examples 1-2 * ----- | 1-15 | |
| A | GB 1 575 507 A (SHELL INT RESEARCH) 24 September 1980 (1980-09-24) * claims 1, 10-38; example 12 * ----- | 1-15 | |

**TECHNICAL FIELDS SEARCHED (IPC)**

C08F

The present search report has been drawn up for all claims

| Place of search | Date of completion of the search | Examiner |
|---|---|---|
| The Hague | 22 May 2026 | Giani, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 3693

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2026

| Patent document cited in search report | | Publication date | Patent family member(s) | | Publication date |
|---|---|---|---|---|---|
| EP 2010585 | B1 | 09-09-2009 | AT | E442392 T1 | 15-09-2009 |
| | | | AT | E469180 T1 | 15-06-2010 |
| | | | BR | PI0710620 A2 | 16-08-2011 |
| | | | BR | PI0710625 A2 | 16-08-2011 |
| | | | CN | 101426828 A | 06-05-2009 |
| | | | CN | 101426829 A | 06-05-2009 |
| | | | EP | 1847557 A1 | 24-10-2007 |
| | | | EP | 2010585 A1 | 07-01-2009 |
| | | | EP | 2010586 A1 | 07-01-2009 |
| | | | ES | 2329196 T3 | 23-11-2009 |
| | | | JP | 5105107 B2 | 19-12-2012 |
| | | | JP | 5324426 B2 | 23-10-2013 |
| | | | JP | 2009534484 A | 24-09-2009 |
| | | | JP | 2009534485 A | 24-09-2009 |
| | | | KR | 20090014353 A | 10-02-2009 |
| | | | KR | 20090019803 A | 25-02-2009 |
| | | | RU | 2008144782 A | 27-05-2010 |
| | | | TW | 200804498 A | 16-01-2008 |
| | | | TW | 200806697 A | 01-02-2008 |
| | | | US | 2009264590 A1 | 22-10-2009 |
| | | | US | 2010190912 A1 | 29-07-2010 |
| | | | WO | 2007122014 A1 | 01-11-2007 |
| | | | WO | 2007122016 A1 | 01-11-2007 |
| US 6451913 | B1 | 17-09-2002 | NONE | | |
| GB 1575507 | A | 24-09-1980 | AR | 222626 A1 | 15-06-1981 |
| | | | AT | 345952 B | 10-10-1978 |
| | | | AU | 507379 B2 | 14-02-1980 |
| | | | BE | 850336 A | 13-07-1977 |
| | | | CA | 1110396 A | 06-10-1981 |
| | | | CH | 631725 A5 | 31-08-1982 |
| | | | DE | 2700294 A1 | 18-08-1977 |
| | | | DK | 1077 A | 11-08-1977 |
| | | | FR | 2340959 A1 | 09-09-1977 |
| | | | GB | 1575507 A | 24-09-1980 |
| | | | IT | 1241565 B | 18-01-1994 |
| | | | JP | S5296695 A | 13-08-1977 |
| | | | JP | S6150120 B2 | 01-11-1986 |
| | | | NL | 7700168 A | 12-08-1977 |
| | | | SE | 433228 B | 14-05-1984 |
| | | | SU | 719512 A3 | 29-02-1980 |
| | | | US | 4116917 A | 26-09-1978 |
| | | | ZA | 7719 B | 30-11-1977 |

EPO FORM P0459

For more details about this annex : see Official Journal of the European Patent Office, No. 12/82